(19) Europäisches Patentamt
European Patent Office
Office européen des brevets

(11) EP 2 169 872 A2

(12) EUROPEAN PATENT APPLICATION

(43) Date of publication:
31.03.2010 Bulletin 2010/13

(51) Int Cl.:
$H04L\ 9/08$ (2006.01)     $H04L\ 9/12$ (2006.01)

(21) Application number: 08253597.2

(22) Date of filing: 04.11.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 24.09.2008 US 236971

(71) Applicant: Industrial Technology Research Institute
Hsinchu 31040 (TW)

(72) Inventors:
• Wang, King-Hang
  31040 Taiwan (CN)
• Chen, Chin-Der
  31040 Taiwan (CN)
• Sun, Hung-Min
  31040 Taiwan (CN)
• Kao, Yih-Sien
  31040 Taiwan (CN)

(74) Representative: Roberts, Mark Peter
J.A. Kemp & Co.
14 South Square
Gray's Inn
London WC1R 5JJ (GB)

(54) **Systems and methods for key management**

(57)     A method for key management for a broadcasting system includes generating a receiver group key (RGK) seed and a plurality of parameters for a receiver group provided by the broadcasting system; and calculating an RGK for the receiver group based on the RGK seed and the plurality of parameters.

Fig. 3

EP 2 169 872 A2

**Description**

Field of the Invention

This invention pertains in general to systems and methods useful for key management.

Background of the Invention

A broadcasting system may be a conditional access system, which broadcasts digital media to subscriber devices that have access rights. For example, a broadcasting system for digital pay-TV enables a service provider to offer various pay services, based on a service packaging method, for video and audio data transmitted via satellite or cable. The video and audio data are usually encrypted with keys. A subscriber device needs the keys to decrypt the encrypted video and audio data.

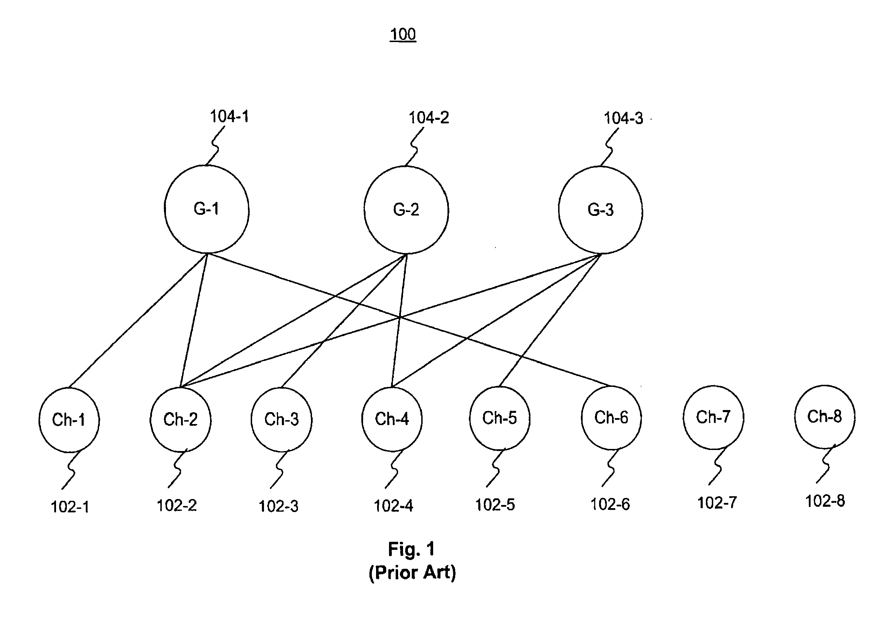

Fig. 1 illustrates a conventional service packaging method 100 performed by a broadcasting system. Typically, the broadcasting system provides a plurality of channels of data/content. For example, in Fig. 1, the broadcasting system provides eight channels Ch-1 102-1, Ch-2 102-2, ..., Ch-8 102-8 of data/content. Each of the channels Ch-1 102-1, Ch-2 102-2, ..., Ch-8 102-8 may be defined as an independent resource.

Based on the conventional service packaging method, the broadcasting system may further provide a plurality of channel packages such as first, second, and third channel packages G-1 104-1, G-2 104-2, and G-3 104-3, in addition to providing the channels Ch-1 102-1, Ch-2 102-2, ..., Ch-8 102-8. For example, the first channel package G-1 104-1 may include the channels Ch-1 102-1, Ch-2 102-2, and Ch-6 102-6, the second channel package G-2 104-2 may include the channels Ch-2 102-2, Ch-3 102-3, and Ch-4 102-4, and the third channel package G-3 104-3 may include the channels Ch-2 102-2, Ch-4 102-4, and Ch-5 102-5. Each of the channel packages G-1 104-1, G-2 104-2, and G-3 104-3 may be defined as a resource group.

Each of the channels Ch-1 102-1, Ch-2 102-2, ..., Ch-8 102-8 and the channel packages G-1 104-1, G-2 104-2, and G-3 104-3 may be further defined as a receiver group. Therefore, in Fig. 1, there are eleven receiver groups including eight channels Ch-1 102-1, Ch-2 102-2, ..., Ch-8 102-8 and three channel packages G-1 104-1, G-2 104-2, and G-3 104-3. A subscriber device may subscribe to one or ones of the receiver groups. For example, if a user of the subscriber device is interested in content of the channels Ch-1 102-1, Ch-2 102-2, Ch-3 102-3, and Ch-6 102-6, the subscriber device may subscribe to first and second receiver groups corresponding to the channel Ch-3 104-3 and the channel package G-1 104-1, respectively.

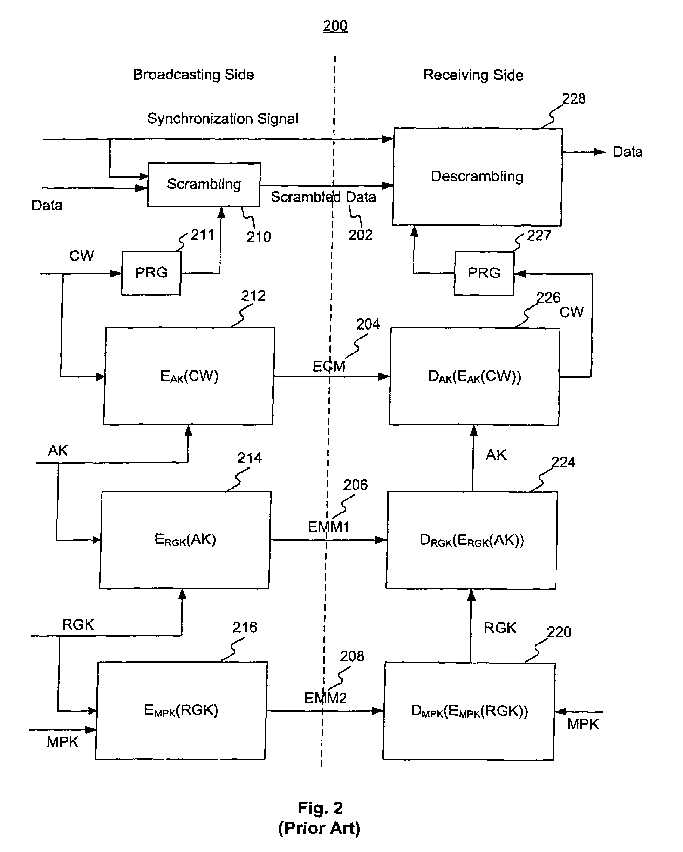

Fig. 2 illustrates a conventional broadcasting method 200. Based on the conventional broadcasting method 200, a broadcasting system may broadcast scrambled data 202, an entitlement control message (ECM) 204, a first entitlement management message (EMM1) 206, and a second entitlement management message (EMM2) 208 from a broadcasting side, i.e., the broadcasting system, to a receiving side, i.e., a subscriber device.

On the broadcasting side, a channel of original data, e.g., digital media data, is encrypted or scrambled with a random signal based on a synchronization signal $S_{sync}$ (step 210), and the scrambled data 202 is broadcasted. The random signal is generated by a first pseudorandom generator (PRG) based on a control word (CW) (step 211). The CW is encrypted with an authorization key (AK) corresponding to the channel (step 212), and the encrypted CW is broadcasted in the ECM message 204. Typically, each independent resource, such as a channel of data/content, may have an AK. The AK is encrypted with a receiver group key (RGK) corresponding to a receiver group including the channel (step 214), and the encrypted AK is broadcasted in the EMM1 message 206. Typically, each receiver group may have an RGK. The RGK is encrypted with a master private key (MPK) (step 216), and the encrypted RGK is broadcasted in the EMM2 message 206. Typically, each subscriber device may have or be provided with the MPK. The MPK is unique for each subscriber device.

On the receiving side, the received EMM2 message 208 is decrypted with the MPK to retrieve the RGK (step 220). For example, the MPK may be stored in a smart card provided to the subscriber device. The received EMM1 message 206 is then decrypted with the retrieved RGK to retrieve the AK (step 224), and the received ECM message 204 is decrypted with the retrieved AK to retrieve the CW (step 226). The retrieved CW is further inputted to a second pseudorandom generator (PRG) to generate the random signal (step 227), which is used to descramble the received scrambled data 202 to obtain the original data based on the synchronization signal $S_{sync}$ (step 228).

For security purposes, an RGK for a receiver group is usually updated, e.g., every month. In addition, when a new subscriber device subscribes to the receiver group or an existing subscriber device un-subscribes from the receiver group, the RGK may also need to be updated. For example, when the new subscriber device subscribes to the receiver group, the broadcasting system updates the RGK for the receiver group to prevent the new subscriber device from obtaining the RGK before updating to decrypt data broadcasted before the new subscriber device subscribes to the receiver group. Also for example, when the existing subscriber device's subscription to the receiver group expires, the broadcasting system updates the RGK for the receiver group such that the subscriber device may not decrypt data after the subscription expires. Further for example, when the existing subscriber device cancels the subscription or changes to another receiver group before the subscription expires, the broadcasting system updates the RGK for the receiver group such that the subscriber device may not decrypt data after the cancellation or the change.

Each time an RGK for a receiver group is updated, the broadcasting system needs to broadcast an EMM2 message including the updated RGK to subscriber devices subscribing to the receiver group. Broadcasting overhead of the broadcasting system may increase when a data amount of EMM2 messages increases.

## SUMMARY OF THE INVENTION

The features of the invention are defined in the claims. However, where a claim contains multiple features, it must be understood that any one of those features may be applied independently of the others. Accordingly, no assumption is to be drawn that the claims define strict combinations of features that must be grouped together for technical reasons.

In accordance with the invention, there is provided a method for key management for a broadcasting system, comprising: generating a receiver group key (RGK) seed and a plurality of parameters for a receiver group provided by the broadcasting system; and calculating an RGK for the receiver group based on the RGK seed and the plurality of parameters.

Optionally, the method further comprises generating the RGK seed randomly.

Optionally, the method further comprises generating the plurality of parameters based on an elliptical curve and a bilinear pairing function on the elliptical curve.

Optionally, the method further comprises assigning the RGK seed and a plurality of keys each generated from ones of the plurality of parameters to a subscriber device subscribing to the receiver group.

Optionally, the method further comprises updating the RGK seed for the receiver group if the subscriber device un-subscribes from the receiver group before the subscriber device's subscription expires.

Optionally, the method further comprises calculating the RGK for the receiver group without broadcasting the calculated RGK, when the subscriber device's subscription expires.

Optionally, the assigning comprises storing the RGK seed and the plurality of keys in a smart card provided to the subscriber device.

Optionally, the method further comprises generating, for the receiver group, a tree structure including a plurality of nodes; assigning prime numbers each to one of the plurality of nodes; and generating a plurality of private keys one for each of the plurality of nodes, based on the assigned prime numbers.

Optionally, the plurality of nodes include a plurality of leaf nodes, the methods further comprising: assigning a subscriber device subscribing to the receiver group to one of the plurality of leaf nodes; and assigning ones of the plurality of private keys to the subscriber device such that the subscriber device knows or may derive the private key for each of remaining ones of the plurality of leaf nodes.

Optionally, when the subscriber device un-subscribes from the receiver group before the subscriber device's subscription expires, the method further comprises updating the RGK seed for the receiver group.

Optionally, the updating comprises: generating a random number; updating the RGK seed based on the random number; encrypting the random number using the private key for the one of the plurality of leaf nodes; and broadcasting the encrypted random number.

Optionally, generating the RGK seed comprises generating the RGK seed for a channel or a channel package.

Also in accordance with the invention, there is provided a broadcasting method for a broadcasting system, comprising: generating a receiver group key (RGK) seed for a receiver group provided by the broadcasting system; calculating an RGK for the receiver group based on the RGK seed; encrypting an authorization key (AK) for a channel of data using the calculated RGK; and broadcasting an entitlement management message (EMM) including the encrypted AK.

Optionally, the method further comprises assigning the RGK seed to a subscriber device subscribing to the receiver group.

Optionally, the method further comprises updating the RGK seed if the subscriber device un-subscribes from the receiver group before the subscriber device's subscription expires.

Optionally, the updating comprises: generating a random number; updating the RGK seed based on the random number; encrypting the random number; and broadcasting the encrypted random number.

Optionally, the method further comprises calculating the RGK for the receiver group without broadcasting the calculated RGK, when the subscriber device's subscription expires.

Optionally, the method further comprises encrypting a control word (CW) using the AK; and broadcasting an entitlement control message (ECM) including the encrypted CW.

Optionally, the method further comprises generating a random signal based on the CW; encrypting the channel of data using the random signal; and broadcasting the encrypted channel data.

Optionally, encrypting the channel of data comprises scrambling the channel of data using the random signal.

Optionally, the generating comprises generating the RGK seed for a channel or a channel package.

Optionally, the generating comprises generating the RGK seed for a receiver group provided by a digital broadcasting system or a pay-TV system.

Further in accordance with the invention, there is provided a method for a subscriber device to access a channel of data broadcasted from a broadcasting system, comprising: receiving an entitlement management message (EMM) from the broadcasting system, the EMM including an encrypted authorization key (AK) corresponding to the channel; calculating a receiver group key (RGK) for a receiver group based on an RGK seed and a plurality of keys, the receiver group including the channel; and decrypting the encrypted AK using the calculated RGK.

Optionally, the method further comprises receiving an entitlement control message (ECM) from the broadcasting system, the ECM including an encrypted control word (CW); and decrypting the encrypted CW using the decrypted AK.

Optionally, the method further comprises receiving scrambled data from the broadcasting system; generating a random signal based on the decrypted CW; and descrambling the scrambled data using the random signal.

Optionally, the RGK seed and the plurality of keys are stored in a smart card provided to the subscriber device.

Optionally, the subscriber device is a first subscriber device, the method further comprising updating the RGK seed for the receiver group if a second subscriber device un-subscribes from the receiver group before the second subscriber device's subscription expires.

Optionally, the updating comprises: receiving a random number encrypted by a private key corresponding to the second subscriber device; decrypting the encrypted random number; and updating the RGK seed for the receiver group based on the decrypted random number.

Optionally, the subscriber device is a first subscriber device, and the EMM is a first entitlement management message (EMM1), the method further comprising calculating the RGK for the receiver group without receiving a second entitlement management message (EMM2) from the broadcasting system, when a second subscriber device's subscription to the receiver group expires.

Further in accordance with the invention, there is provided a broadcasting system for providing a plurality of receiver groups, the system being configured to: generate receiver group key (RGK) seeds one for each of the plurality of receiver groups; and calculate RGKs one for each of the plurality of receiver groups based on the respective RGK seeds.

Optionally, the system is further configured to assign to a subscriber device subscribing to one of the receiver groups the RGK seed for the one of the receiver groups.

Optionally, the system is further configured to update the RGK seed for the one of the receiver groups, if the subscriber device un-subscribes from the one of the receiver groups before the subscriber device's subscription expires.

Optionally, the system is further configured to calculate the RGK for the one of the receiver groups without broadcasting the calculated RGK, when the subscriber device's subscription expires.

Optionally, the system is a digital broadcasting system for broadcasting digital media.

Optionally, the system is a pay-TV system.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this specification, illustrate embodiments of the invention and, together with the description, serve to explain the principles of the invention.

Fig. 1 illustrates a conventional service packaging method performed by a broadcasting system.

Fig. 2 illustrates a conventional broadcasting method.

Fig. 3 illustrates a broadcasting method for a broadcasting system, according to an exemplary embodiment.

Fig. 4 illustrates an initialization method for key management, according to an exemplary embodiment.

Fig. 5 illustrates an exemplary tree structure generated by a broadcasting system, according to an exemplary embodiment.

## DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments consistent with the present invention do not represent all implementations consistent with the invention. Instead, they are merely examples of systems and methods consistent with aspects related to the invention as recited in the appended claims.

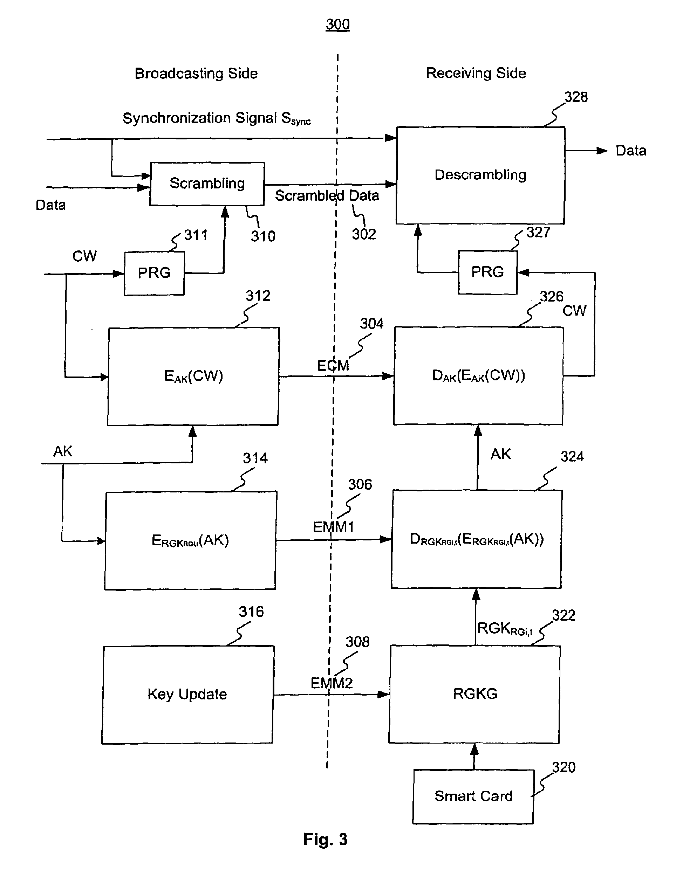

Fig. 3 illustrates a broadcasting method 300 to provide improved performance of a broadcasting system, according to an exemplary embodiment. For example, the broadcasting system may provide a plurality of receiver groups such as channels, or channel packages each including a plurality of channels.

Referring to Fig. 3, the broadcasting system broadcasts scrambled data 302, an entitlement control message (ECM) 304, and a first entitlement management message (EMM1) 306. The broadcasting system may further broadcast a second entitlement management message (EMM2) 308.

In exemplary embodiments consistent with the present invention, the broadcasting system encrypts, e.g., scrambles, a channel of original data such as digital media data with a random signal to generate the scrambled data 302 (step 310), based on a synchronization signal $S_{sync}$, and broadcasts the scrambled data 302. The random signal is generated by a first pseudorandom generator (PRG) based on a control word (CW) (step 311). The broadcasting system encrypts the CW with an authorization key (AK) corresponding to the channel (step 312), and broadcasts the ECM message 304 including the encrypted CW. The broadcasting system also encrypts the AK with a receiver group key (RGK) $RGK_{RGi,\,t}$ (step 314), which corresponds to a receiver group RGi including the channel and changes with time $t$, and broadcasts the EMM1 message 306 including the encrypted AK.

In one exemplary embodiment, the broadcasting system generates a plurality of RGK seeds $RGK_{RGi}$ (i = 1, 2, ..., N, where N is the total number of receiver groups provided by the broadcasting system), or initial RGKs, one for each of the plurality of receiver groups. For example, the broadcasting system may generate the plurality of RGK seeds $RGK_{RGi}$ (i = 1, 2, ..., N) randomly.

The broadcasting system calculates RGKs one for each of the plurality of receiver groups based on the respective RGK seeds $RGK_{RGi}$ (i = 1, 2, ..., N). For example, the broadcasting system may calculate $RGK_{RGi,\,t}$ for the receiver group RGi, e.g., every day, to update $RGK_{RGi,\,t}$ on a daily basis. As a result, $RGK_{RGi,\,t}$ changes with time. Also for example, the update calculation is based on the RGK seed $RGK_{RGi}$ for the receiver group RGi, such update calculation being further described below.

In exemplary embodiments consistent with the present invention, the broadcasting system may assign to subscriber devices subscribing to one of the receiver groups, the RGK seed for the one of the receiver groups. For example, for a subscriber device U0 subscribing to the receiver group RGi, the broadcasting system assigns to the subscriber device U0 the RGK seed $RGK_{RGi}$ for the receiver group RGi.

If the subscriber device U0 un-subscribes from the receiver group RGi before the subscription expires, the broadcasting system may update the RGK seed $RGK_{RGi}$ based on a random number (step 316), and encrypt the random number using a key update method described below. The broadcasting system further broadcasts the EMM2 message 308 including the encrypted random number, such that remaining ones of the subscriber devices subscribing to the receiver group RGi receive the encrypted random number, decrypt the encrypted random number, and use the random number to update the RGK seed $RGK_{RGi}$, correspondingly.

However, if the subscriber device U0 un-subscribes from the receiver group RGi when the subscription expires, the broadcasting system does not need to broadcast the EMM2 message 308. As noted above, the broadcasting system may calculate $RGK_{RGi,\,t}$ for the receiver group RGi, e.g., every day, to update $RGK_{RGi,\,t}$ on a daily basis. As a result, the value of $RGK_{RGi,\,t}$ changes with time. The subscriber device U0 performs substantially the same update calculation based on the RGK seed $RGK_{RGi}$ and a plurality of keys using a key derivation method described below and, hence, obtains $RGK_{RGi,\,t}$ for the receiver group RGi. For example, the RGK seed $RGK_{RGi}$ for the receiver group RGi and the plurality of keys may be stored in a smart card 320 provided to the subscriber device U0, such that the subscriber device U0 may use the RGK seed $RGK_{RGi}$ and the plurality of keys to calculate $RGK_{RGi,\,t}$.

However, unlike the broadcasting system, the subscriber device U0 can perform the update calculation only during the subscription, based on the key derivation method. When the subscription expires, the subscriber device U0 will be unable to perform the update calculation. In other words, the subscriber device U0 is automatically deactivated when the subscription expires.

Still referring to Fig. 3, during the subscription, the subscriber device U0 calculates $RGK_{RGi,\,t}$ based on the RGK seed $RGK_{RGi}$ and the plurality of keys (step 322). For example, the subscriber device U0 may include an RGK generator (RGKG) to calculate the value of $RGK_{RGi,\,t}$. The subscriber device U0 receives the EMM1 message 306, and decrypts the received EMM1 message 306 with the calculated value of $RGK_{RGi,\,t}$ to retrieve the AK (step 324). The subscriber device U0 also receives the ECM message 304, and decrypts the received ECM message 304 with the retrieved AK to retrieve the CW (step 326). Based on the retrieved CW, a second pseudorandom generator (PRG) generates the random signal (step 327). The subscriber device U0 further receives the scrambled data 302 and uses the random signal to descramble the received scrambled data 302 to obtain the original data, based on the synchronization signal $S_{sync}$ (step 328).

In exemplary embodiments consistent with the present invention, a plurality of key management methods are provided for the broadcasting system using the broadcasting method 300. The key management method may include an initialization method, a key assignment method, the key derivation method noted above, and the key update method noted above. These key management methods are further described below.

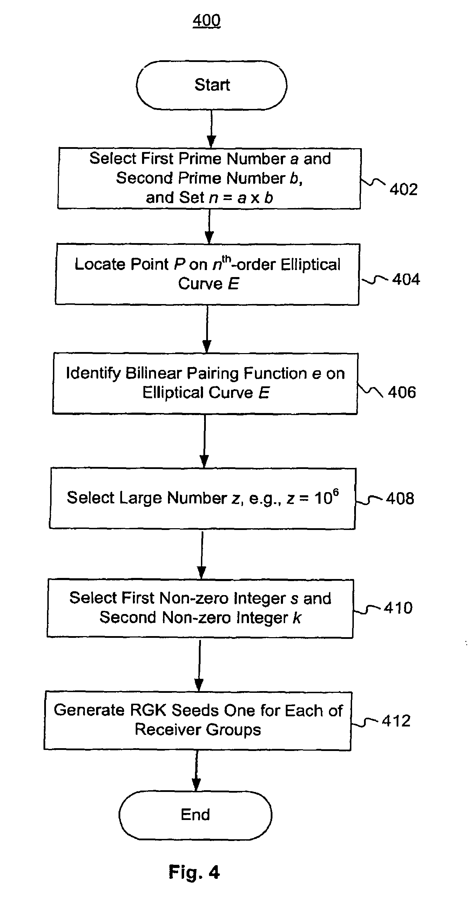

Fig. 4 illustrates an initialization method 400 for key management, according to an exemplary embodiment. Based on the initialization method 400, the broadcasting system generates, during system power-up, the plurality of RGK seeds one for each of the receiver groups, and a plurality of parameters. For example, the broadcasting system generates the plurality of parameters based on cryptography methods relating to a bilinear pairing function and a discrete logarithm problem in elliptic curve cryptography (ECC).

Referring to Fig. 4, the broadcasting system selects a first prime number $a$ and a second prime number $b$, and sets a number $n$ equal to a product of $a$ and $b$, i.e., $n = a$ x $b$ (step 402). For example, the numbers $a$ and $b$ may be large prime numbers. The broadcasting system locates a point $P$ on an $n^{th}$-order elliptical curve $E$ (step 404), and identifies a bilinear pairing function $e$ on the elliptical curve $E$ (step 406).

The broadcasting system also selects a large number $z$, e.g., $z = 10^6$ (step 408). The broadcasting system further randomly selects a first *non-zero integer s and* a second non-zero integer $k$ each smaller than the number $n$ (step 410). The integer $s$ and the number $n$ are relatively prime, and the integer $k$ and the number $n$ are also relatively prime. In addition, the broadcasting system generates the plurality of RGK seeds one for each of the receiver groups (step 412). Steps 402-412 may be performed in a different order. For example, step 412 may be first performed, followed by steps 402-410.

In one exemplary embodiment, based on the initialization method 400, the broadcasting system may further generate a plurality of tree structures one for each of the receiver groups. For example, the tree structure for the receiver group RGi may provide private keys to update the RGK seed $RGK_{RGi}$, when the subscriber device U0 un-subscribes from the receiver group RGi before the subscription expires.

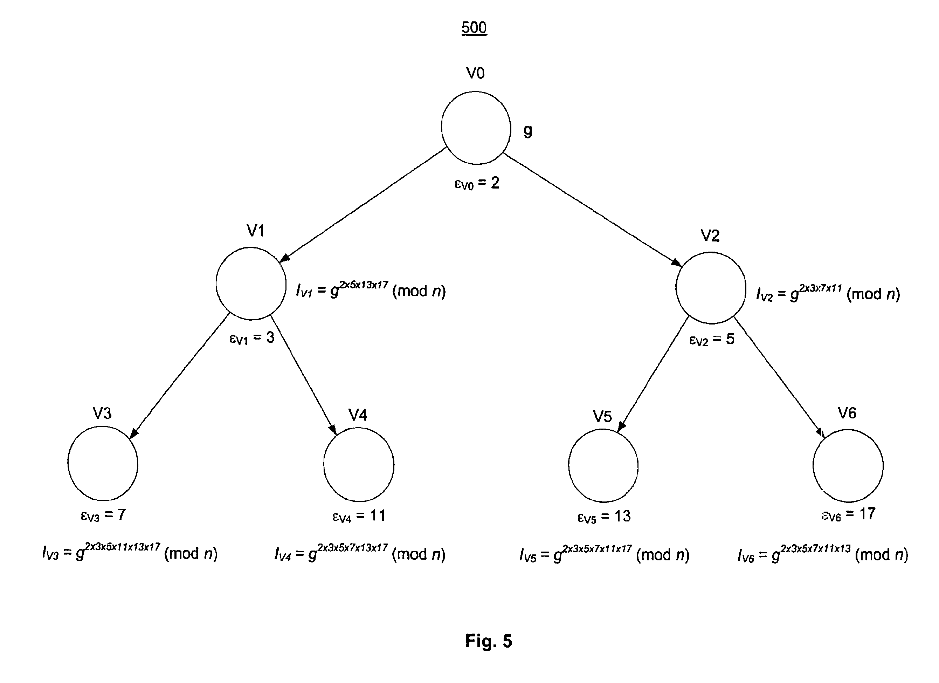

Fig. 5 illustrates an exemplary tree structure 500 generated by the broadcasting system, according to an exemplary embodiment. The exemplary tree structure 500 is a binary tree generated by the broadcasting system for the receiver group RGi. For illustrative purposes only, it is assumed that at most four subscriber devices would subscribe to the receiver group RGi.

Referring to Fig. 5, the tree structure 500 has a plurality of nodes V0, V1, ..., V6, among which the nodes V3, V4, V5, and V6 are leaf nodes. In the illustrated embodiment, a subscriber device may be assigned to a leaf node. Therefore, the four leaf nodes V3, V4, V5, and V6 in the tree structure 500 constitute four subscriber devices subscribing to the receiver group RGi.

The nodes Vi (i = 0, 1, ..., 6) are each associated with a prime number $\varepsilon_{Vi}$, shown labeled in Fig. 5. For example, the node V0 is associated with the prime number 2, i.e., $\varepsilon_{V0} = 2$. Also for example, the node V6 is associated with the prime number 17, i.e., $\varepsilon_{V6} = 17$. The prime numbers $\varepsilon_{Vi}$ (i = 0, 1, ..., 6) for the nodes V0, V1, ..., and V6, respectively, are public information, and may be used to generate private keys $I_{vi}$ (i = 1, 2, ..., 6) each associated with one of the nodes V1, V2, ..., and V6, based on Equations (1) and (2):

$$I_{vi} = g^{e_{vi}} (\text{mod } n), \qquad \text{Equation (1)}$$

$$e_{vi} = \prod_{v} \varepsilon_v / (\varepsilon_{vi} \cdot \prod_{vj < vi} \varepsilon_{vj}), \qquad \text{Equation (2)}$$

where $g$ is a non-zero integer, $e_{vi}$ is a temporary value corresponding to the node Vi and used for illustrative purposes only, mod is a modulus operator, and $\Pi$ is a multiplication operation on two or more numbers. Equation (2) shows the temporary value $e_{vi}$ corresponding to the node Vi is equal to a ratio between first and second values, the first value being a product of the prime numbers $\varepsilon_{V1}$, $\varepsilon_{V2}$, ..., $\varepsilon_{V6}$ for all the nodes V0, V1, ..., and V6 in the tree structure 500, the second value being a product of the prime number $\varepsilon_{Vi}$ for the node Vi and the prime numbers respectively for descendant nodes Vj of the node Vi. If the node Vi is a leaf node, e.g., the node V6, and hence, has no descendant nodes, the second value would be the prime number $\varepsilon_{Vi}$ for the node Vi.

For example, the temporary value $e_{v1}$ corresponding to the node V1 is equal to the ratio between the first and second values. The first value is equal to the product of the prime numbers $\varepsilon_{V1}$, $\varepsilon_{V2}$, ..., $\varepsilon_{V6}$ for all the nodes V0, V1, ..., and V6 in the tree structure 500, i.e., the first value is equal to 2 x 3 x 5 x 7 x 11 x 13 x 17. The second value is equal to the product of the prime number $\varepsilon_{V1}$ for the node V1 and the prime numbers respectively for descendant nodes Vj of the node V1. In the illustrated embodiment, the nodes V3 and V4 are the descendant nodes of the node V1. Therefore the second value is equal to 3 x 7 x 11. As a result, the temporary value $e_{v1}$ corresponding to the node V1 is equal to (2 x 3 x 5 x 7 x 11 x 13 x 17) / (3 x 7 x 11) = 2 x5x13x17.

Also for example, the temporary value $e_{v6}$ corresponding to the node V6 is equal to the ratio between the first and second values. The first value is equal to the product of the prime numbers $\varepsilon_{V1}$, $\varepsilon_{V2}$, ..., $\varepsilon_{V6}$ for all the nodes V0, V1, ..., and V6 in the tree structure 500, i.e., the first value is equal to 2 x 3 x 5 x 7 x 11 x 13 x 17. The second value is equal to the product of the prime number $\varepsilon_{v6}$ for the node V6 and the prime numbers for descendant nodes Vj of the node V6. However, in the illustrated embodiment, the node V6 is a leaf node and, hence, has no descendant nodes. Therefore the second value is equal to the prime number $\varepsilon_{v6}$ for the node V6, i.e., 17. As a result, the temporary value $e_{v6}$ corresponding to the node V6 is equal to (2 x 3 x 5 x 7 x 11 x 13 x 17) / 17 = 2 x 3 x 5 x 7 x 11 x 13.

As noted above, the prime numbers $\varepsilon_{Vi}$ (i = 0, 1, ..., 6) respectively for the nodes V0, V1, ..., and V6 are public information. Therefore, the private keys $I_{V3}$, $I_{V4}$, $I_{V5}$, and $I_{V6}$ for the leaf nodes V3, V4, V5, and V6 may each be derived from one of the private keys $I_{V1}$ and $I_{V2}$ for the nodes V1 and V2. For example, the private key $I_{v3}$ for the leaf node V3 may be derived from the private key $I_{V1}$ for the parent node V1, based on the prime numbers $\varepsilon_{V1}$ and $\varepsilon_{V4}$. However, the private key $I_{v1}$ for the node V1 may not be derived from the private key $I_{V3}$ for the node V3, which is an RSA-based problem in cryptography.

In exemplary embodiments consistent with the present invention, based on a key assignment method, the broadcasting system assigns to a subscriber device, which subscribes to one of the receiver groups from a start time $t1$ to an end time $t2$, a plurality of keys and one of the RGK seeds for the one of the receiver groups. For example, the start time $t1$ and the end time $t2$ may each be measured relative to a time when the system power-up is performed.

In the illustrated embodiment, for the subscriber device U0 subscribing to the receiver group RGi, the broadcasting system assigns to the subscriber device U0 the keys $s/k$, $s^{t1}P$, $a^{t1}P$, $K^{(t2-t)}b^{(z-t2)}P$, $ka+b/k$, $t1$, and $t2$, and the RGK seed $RGK_{RGi}$, where $s$, $k$, $P$, $a$, and $b$ are the parameters generated under the initialization method described above. These keys and the RGK seed $RGK_{RGi}$ may be stored in the smart card provided to the subscriber device U0.

In addition, the broadcasting system assigns the subscriber device U0 to one of the leaf nodes in the tree structure corresponding to the one of the receiver groups to which the subscriber device U0 subscribes. For example, the broadcasting system assigns the subscriber device U0 to the leaf node V6 in the tree structure 500 corresponding to the receiver group RGi.

The broadcasting system further assigns to the subscriber device U0 ones of the private keys $I_{vi}$ (i = 1, 2, ..., 6) when, e.g., the subscriber device U0 performs a registration to the broadcasting system. For example, the broadcasting system assigns to the subscriber device U0 the private key for the sibling node of the node V6, where the subscriber device U0 is assigned. In the illustrated embodiment, the broadcasting system assigns to the subscriber device U0 the private key $I_{V5}$ of the node V5, which is the sibling node of the node V6. Also for example, the broadcasting system assigns to the subscriber device U0 the private key(s) for the node(s) that have the same depth as the parent node of the node V6, i.e., the neighbor node(s) of the parent node of the node V6. In the illustrated embodiment, the parent node of the node V6 is the node V2, which has the neighbor node V1. Therefore the broadcasting system assigns to the subscriber device U0 the private key $I_{V1}$ for the node V1. However, the broadcasting system does not assigns to the subscriber device U0 the private key $I_{V6}$ for the node V6, where the subscriber device U0 is assigned.

After the above private key assignment, the subscriber device U0 assigned to the leaf node V6 knows or may derive the private key for each of remaining ones of the leaf nodes in the tree structure 500. For example, the subscriber device U0 knows the private key $I_{V5}$ for the leaf node V5. Also for example, the private key $Iv_3$ for the leaf node V3 may be derived from the private key $I_{V1}$ for the node V1, based on the prime numbers $\varepsilon_{V1}$ and $\varepsilon_{V4}$, as noted above. However, the subscriber device U0 does not know the private key $I_{V6}$ for the node V6, where the subscriber device U0 is assigned. In other words, if a subscriber device is assigned to one of the leaf nodes in the tree structure 500, that subscriber device knows or may derive the private key for each of remaining ones of the leaf nodes in the tree structure 500, but not the private key for the leaf node to which the subscriber device is assigned.

In exemplary embodiments consistent with the present invention, based on a key derivation method, the broadcasting system calculates an RGK for each of the receiver groups. For example, the broadcasting system calculates $RGK_{RGi,t}$ for the receiver group RGi based on the RGK seed $RGK_{RGi}$ and ones of the plurality of parameters.

In one exemplary embodiment, The broadcasting system calculates $RGK_{RGi, t}$ for the receiver group RGi, e.g., every day, to update $RGK_{RGi, t}$ on a daily basis, based on the following equation:

$$RGK_{RGi,t} = (RGK_{RGi})^{TK_t} , \qquad \text{Equation (3)}$$

$$TK_t = e(P,P)^{(a^t + b^{z-t})s^t} , \qquad \text{Equation (4)}$$

where $TK_t$ is a calculated key, $e$, $P$, $a$, $b$, and $z$ are the parameters generated under the initialization method described above, and $t$ is a current time relative to the time when the system power-up is performed. As a result, $RGK_{RGi,t}$ changes with time.

The subscriber device U0 performs calculations also based on Equation (3) and, hence, obtains $RGK_{RGi, t}$ for the receiver group RGi. For example, let $t = t1 + x = t2 - y$ $(x \geq 0, y \geq 0)$, where $t$ is the current time. In the illustrated embodiment, the subscriber device U0 performs the following calculations using the keys $s/k$, $s^{t1}P$, $a^{t1}P$, $k^{(t2-t1)}b^{(z-t2)}P$, $ka+b/k$, $t1$, and $t2$ stored in the smart card:

$$A = a^{t1}P \times (ka + b/k)^x = k^x a^{t1+x}P = k^x a^t P, \qquad \text{Equation (5)}$$

$$B = k^{(x+y)}b^{z-t2}p \times (ka+b/k)^y = k^{x+y}k^{-y}b^{z-t2+y}P = k^x b^{z-t}P, \qquad \text{Equation (6)}$$

$$C = S^{t1}P \times (s/k)^x = (s^{t1+x}/k^x)P = (s^t/k^x)P, \qquad \text{Equation (7)}$$

$$\begin{aligned}
e(A + B, C) &= e\left((k^x a^t + k^x b^{z-t})P, (s^t/k^x)P\right) \\
&= e\left((a^t + b^{z-t})P, s^t P\right) \qquad \text{Equation (8)} \\
&= e(P,P)^{(a^t + b^{z-t})s^t}
\end{aligned}$$

where $A$, $B$, and $C$ are temporary values, and e is the parameter generated under the initialization method described above.

The value of $e(A+B, C)$ calculated by the subscriber device U0 in Equation (8) is substantially equal to the key $TK_t$ calculated by the broadcasting system in Equation (4). Therefore the subscriber device U0 may obtain the key $TK_t$ after performing calculations based on Equations (5)-(8), i.e., $TK_t = e(A+B, C)$. The subscriber device U0 further performs calculations based on Equation (3) and, hence, obtains $RGK_{RGi, t}$ for the receiver group RGi.

Unlike the broadcasting system, the subscriber device U0 can perform the calculations based on Equations (5)-(8) and, hence, the calculations based on Equation (3), only during the subscription, i.e., when $t1 \leq t \leq t2$. The start time $t1$ and the end time $t2$ are stored, as ones of the keys, in the smart card provided to the subscriber device U0. When the subscription expires, the subscriber device U0 will be unable to perform the calculation. In other words, the subscriber device U0 is automatically deactivated when the subscription expires.

In exemplary embodiments consistent with the present invention, based on a key update method, the broadcasting system updates, when a subscriber device un-subscribes from one of the receiver groups before the subscription expires, one of the RGK seeds corresponding to the one of the receiver groups. For example, when the subscriber device U0 un-subscribes from the receiver group RGi before the subscription expires, the broadcasting system updates the RGK seed $RGK_{RGi}$ for the receiver group RGi based on a random number. The broadcasting system further encrypts the random number, and broadcasts the EMM2 message 306 (Fig. 3) including the encrypted random number to other subscriber devices.

Referring back to Fig. 5, for illustrative purposes only, it is assumed subscriber devices U1, U2, and U3 and the subscriber device U0 subscribe to the receiver group RGi and hence, are respectively assigned to the leaf nodes V3, V4, V5, and V6 of the tree structure 500 corresponding to the receiver group RGi.

In the illustrated embodiment, when the subscriber device U0 un-subscribes from the receiver group RGi, the broadcasting system generates a random number $X$, and updates the RGK seed $RGK_{RGi}$ for the receiver group RGi based on the random number $X$. For example, the broadcasting system uses the following equation to update the RGK seed $RGK_{RGi}$:

$$RGK_{RGi}' = (RGK_{RGi})^X, \qquad \text{Equation (9)}$$

where $RGK_{RGi}'$ is the updated RGK for the receiver group RGi.

The broadcasting system also encrypts the number $X$ with the private key $I_{V6}$ of the node V6, where the subscriber device U0 is assigned, and broadcasts the EMM2 message 308 (Fig. 3) including the encrypted number $X$

to other subscriber devices subscribing to the receiver group RGi, i.e., the subscriber devices U1, U2, and U3. The broadcasting system further updates the private keys $I_{vi}$ (i = 1, 2, ..., 6) that are each associated with one of the nodes V1, V2, ... , and V6 based on the following equation:

$$I_{Vi}' = I_{Vi}{}^{X} \ (\text{mod } n), \qquad\qquad \text{Equation (10)}$$

where $n$ is the number generated in the initialization method described above, and $I_{Vi}'$ is the updated $I_{Vi}$.

The subscriber devices U1, U2, and U3 receive the EMM2 message 308 (Fig. 3) including the encrypted number $X$. As noted above for a subscriber device assigned to one of the leaf nodes of the tree structure 500, that subscriber device knows or may derive the private key for each of remaining ones of the leaf nodes in the tree structure 500. In the illustrated embodiment, the subscriber devices U1 and U2 are respectively assigned to the leaf nodes V3 and V4 and, hence, may derive the private key $I_{V6}$ for the leaf node V6 based on the private key $I_{V2}$ for the node V2. The subscriber device U3 assigned to the leaf node V5 knows the private key $I_{V6}$ for the leaf node V6. Therefore, the subscriber devices U1, U2, and U3 each may decrypt the encrypted number $X$ to obtain the number $X$, and update the RGK seed $RGK_{RGi}$ also based on Equation (9). In addition, the subscriber devices U1, U2, and U3 may further use the number $X$ to update their respective assigned private keys, based on Equation (10).

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

**Claims**

1. A method for key management for a broadcasting system, comprising:

   generating a receiver group key (RGK) seed and a plurality of parameters for a receiver group provided by the broadcasting system; and
   calculating an RGK for the receiver group based on the RGK seed and the plurality of parameters.

2. The method of claim 1, further comprising generating the RGK seed randomly.

3. The method of claim 1 or 2, further comprising generating the plurality of parameters based on an elliptical curve and a bilinear pairing function on the elliptical curve.

4. The method of claim 1, 2 or 3, further comprising assigning the RGK seed and a plurality of keys each generated from ones of the plurality of parameters to a subscriber device subscribing to the receiver group;
   said method optionally further comprising updating the RGK seed for the receiver group if the subscriber device unsubscribes from the receiver group before the subscriber device's subscription expires;
   said method optionally further comprising calculating the RGK for the receiver group without broadcasting the calculated RGK, when the subscriber device's subscription expires;
   wherein, optionally, the assigning comprises storing the RGK seed and the plurality of keys in a smart card provided to the subscriber device.

5. The method of any one of the preceding claims, further comprising:

   generating, for the receiver group, a tree structure including a plurality of nodes;
   assigning prime numbers each to one of the plurality of nodes; and
   generating a plurality of private keys one for each of the plurality of nodes, based on the assigned prime numbers;

   wherein, optionally, the plurality of nodes include a plurality of leaf nodes, the method optionally further comprising:

assigning a subscriber device subscribing to the receiver group to one of the plurality of leaf nodes; and assigning ones of the plurality of private keys to the subscriber device such that the subscriber device knows or may derive the private key for each of remaining ones of the plurality of leaf nodes;

wherein, optionally, when the subscriber device un-subscribes from the receiver group before the subscriber device's subscription expires, the method further comprises updating the RGK seed for the receiver group; wherein, optionally, the updating comprises:

generating a random number;
updating the RGK seed based on the random number;
encrypting the random number using the private key for the one of the plurality of leaf nodes; and
broadcasting the encrypted random number;

wherein, optionally, generating the RGK seed comprises generating the RGK seed for a channel or a channel package.

6. A broadcasting method for a broadcasting system, comprising:

generating a receiver group key (RGK) seed for a receiver group provided by the broadcasting system;
calculating an RGK for the receiver group based on the RGK seed;
encrypting an authorization key (AK) for a channel of data using the calculated RGK; and
broadcasting an entitlement management message (EMM) including the encrypted AK.

7. The method of claim 6, further comprising assigning the RGK seed to a subscriber device subscribing to the receiver group;
said method optionally further comprising updating the RGK seed if the subscriber device un-subscribes from the receiver group before the subscriber device's subscription expires;
wherein, optionally, the updating comprises:

generating a random number;
updating the RGK seed based on the random number;
encrypting the random number; and
broadcasting the encrypted random number.

8. The method of claim 4 or 7, further comprising calculating the RGK for the receiver group without broadcasting the calculated RGK, when the subscriber device's subscription expires.

9. The method of claim 6, 7 or 8, further comprising:

encrypting a control word (CW) using the AK; and
broadcasting an entitlement control message (ECM) including the encrypted CW;
said method optionally further comprising:

generating a random signal based on the CW;
encrypting the channel of data using the random signal; and
broadcasting the encrypted channel data;

wherein, optionally, encrypting the channel of data comprises scrambling the channel of data using the random signal.

10. The method of any one of claims 5 to 9, wherein generating the RGK seed comprises generating the RGK seed for a channel, a channel package, a digital broadcasting system or a pay-TV system.

11. A method for a subscriber device to access a channel of data broadcasted from a broadcasting system, comprising:

receiving an entitlement management message (EMM) from the broadcasting system, the EMM including an encrypted authorization key (AK) corresponding to the channel;
calculating a receiver group key (RGK) for a receiver group based on an RGK seed and a plurality of keys, the receiver group including the channel; and

decrypting the encrypted AK using the calculated RGK.

**12.** The method of claim 11, further comprising:

receiving an entitlement control message (ECM) from the broadcasting system, the ECM including an encrypted control word (CW); and
decrypting the encrypted CW using the decrypted AK;
said method optionally further comprising:

receiving scrambled data from the broadcasting system;
generating a random signal based on the decrypted CW; and
descrambling the scrambled data using the random signal.

**13.** The method of claim 11 or 12, wherein the RGK seed and the plurality of keys are stored in a smart card provided to the subscriber device.

**14.** The method of claim 11, 12 or 13, wherein the subscriber device is a first subscriber device, the method further comprising updating the RGK seed for the receiver group if a second subscriber device un-subscribes from the receiver group before the second subscriber device's subscription expires;
wherein, optionally, the updating comprises:

receiving a random number encrypted by a private key corresponding to the second subscriber device;
decrypting the encrypted random number; and
updating the RGK seed for the receiver group based on the decrypted random number.

**15.** The method of claim 11, 12, 13 or 14, wherein the subscriber device is a first subscriber device, and the EMM is a first entitlement management message (EMM1), the method further comprising calculating the RGK for the receiver group without receiving a second entitlement management message (EMM2) from the broadcasting system, when a second subscriber device's subscription to the receiver group expires.

**16.** A broadcasting system for providing a plurality of receiver groups, the system being configured to:

generate receiver group key (RGK) seeds one for each of the plurality of receiver groups; and
calculate RGKs one for each of the plurality of receiver groups based on the respective RGK seeds.

**17.** The system of claim 16, being further configured to assign to a subscriber device subscribing to one of the receiver groups the RGK seed for the one of the receiver groups;
said system optionally being further configured to update the RGK seed for the one of the receiver groups, if the subscriber device un-subscribes from the one of the receiver groups before the subscriber device's subscription expires;
said system optionally being further configured to calculate the RGK for the one of the receiver groups without broadcasting the calculated RGK, when the subscriber device's subscription expires.

**18.** The system of claim 16 or 17, wherein the system is a digital broadcasting system for broadcasting digital media or wherein the system is a pay-TV system.

**Fig. 1**
**(Prior Art)**

EP 2 169 872 A2

<u>200</u>

Broadcasting Side | Receiving Side

Synchronization Signal

**Fig. 2**
**(Prior Art)**

Fig. 3

<u>400</u>

```
         ┌─────────────┐
         │    Start     │
         └──────┬───────┘
                │
                ▼
┌──────────────────────────────┐
│  Select First Prime Number a │
│  and Second Prime Number b,  │ ~402
│      and Set n = a x b       │
└──────────────┬───────────────┘
                │
                ▼
┌──────────────────────────────┐
│  Locate Point P on nth-order │ ~404
│     Elliptical Curve E       │
└──────────────┬───────────────┘
                │
                ▼
┌──────────────────────────────┐
│ Identify Bilinear Pairing    │ 406
│  Function e on Elliptical    │
│          Curve E             │
└──────────────┬───────────────┘
                │
                ▼
┌──────────────────────────────┐
│ Select Large Number z, e.g., │ ~408
│          z = 10⁶             │
└──────────────┬───────────────┘
                │
                ▼
┌──────────────────────────────┐
│ Select First Non-zero        │ ~410
│ Integer s and Second         │
│ Non-zero Integer k           │
└──────────────┬───────────────┘
                │
                ▼
┌──────────────────────────────┐
│ Generate RGK Seeds One for   │ ~412
│ Each of Receiver Groups      │
└──────────────┬───────────────┘
                │
                ▼
         ┌─────────────┐
         │     End      │
         └─────────────┘
```

Step 402: Select First Prime Number $a$ and Second Prime Number $b$, and Set $n = a \times b$

Step 404: Locate Point $P$ on $n^{th}$-order Elliptical Curve $E$

Step 406: Identify Bilinear Pairing Function $e$ on Elliptical Curve $E$

Step 408: Select Large Number $z$, e.g., $z = 10^6$

Step 410: Select First Non-zero Integer $s$ and Second Non-zero Integer $k$

Step 412: Generate RGK Seeds One for Each of Receiver Groups

**Fig. 4**

Fig. 5